Europäisches Patentamt

European Patent Office

Office européen des brevets

(11) Veröffentlichungsnummer: **0 647 906 A1**

## (12) EUROPÄISCHE PATENTANMELDUNG

(21) Anmeldenummer: **94115074.0**

(51) Int. Cl.⁶: **G06F 12/02**, H04M 3/50

(22) Anmeldetag: **24.09.94**

(30) Priorität: **08.10.93 DE 4334313**

(43) Veröffentlichungstag der Anmeldung:
**12.04.95 Patentblatt 95/15**

(84) Benannte Vertragsstaaten:
**AT BE CH DE ES FR GB IT LI NL SE**

(71) Anmelder: **Alcatel SEL Aktiengesellschaft
Lorenzstrasse 10
D-70435 Stuttgart (DE)**

(72) Erfinder: **Ackermann, Uwe
Talstrasse 1
D-71691 Freiberg (DE)**
Erfinder: **Kopp, Dieter
Hirschstrasse 34
D-71282 Hemmingen (DE)**
Erfinder: **Hörmann, Thomas
Wannenstrasse 1
D-71723 Grossbottwar (DE)**

(74) Vertreter: **Knecht, Ulrich Karl et al
Alcatel SEL AG,
Patent- und Lizenzwesen,
Postfach 30 09 29
D-70449 Stuttgart (DE)**

(54) **Verfahren zum Verwalten eines Sprachspeichers und Vorrichtung dafür.**

(57) Es wird ein Verfahren zur Verwaltung eines Sprachspeichers (VMEM) und eine Vorrichtung dafür vorgestellt.

Für den Zugriff mehrerer Benutzer (U1, U2, U3, U4) auf den Sprachspeicher wird dieser in Benutzer-Speicherbereiche (S1, S2, S3, S4) und einem Gemeinschafts-Speicherbereich (SALL) unterteilt. Durch Hinzufügen eines Teils (S4') des Gemeinschafts-Speicherbereichs zu einem der Benutzer-Speicherbereiche (S4) oder umgekehrt wird die Speichergröße dieses Benutzer-Speicherbereichs an den notwendigen Speicherbedarf (Min4) des Benutzers (U4) angepaßt.

Die Speicherkapazität des Sprachspeichers VMEM wird effektiv genutzt, da den Benutzern (U1 bis U4) möglichst kein freier Speicherplatz zugewiesen wird, den diese nicht nutzen. Die Vorrichtung kann z.B. als Voice-Mailbox in einer Telekommunikations-Anlage eingesetzt werden.

FIG. 2B

Sprachspeicher werden dort eingesetzt, wo eine digitale Aufzeichnung von Sprache gewünscht ist. Dies ist beispielsweise in Spracherkennungssystemen, Sprachansagesystemen oder elektronischen Briefboxen (voice mailboxes) der Fall.

Aus US 4 985 914 ist ein Sprachspeicher für eine Telekommunikations-Einrichtung bekannt. Dort wird eine prozessorgesteuerte Schaltung beschrieben für den Zugriff mehrerer Benutzer auf eine als Sprachspeicher dienende Festplatte. Eine Ausführung des Sprachspeichers als Halbleiterspeicher wird nicht beschrieben. Weiterhin wird die Verwaltung des Sprachspeichers nicht beschrieben. Es ist jedoch wichtig einen Sprachspeicher, auf den mehrere Benutzer zugreifen, so zu verwalten, daß die Speicherkapazität des Sprachspeichers möglichst effektiv genutzt wird.

Es ist daher Aufgabe der Erfindung ein Verfahren zum Verwalten eines Sprachspeichers und eine Vorrichtung sowie Telekommunikations-Einrichtungen mit dieser Vorrichtung anzugeben.

Gelöst wird die Aufgabe durch ein Verfahren mit den Merkmalen nach Anspruch 1, eine Vorrichtung mit den Merkmalen nach Anspruch 10, eine Telekommunikations-Anlage mit den Merkmalen nach Anspruch 12 und ein Telekommunikations-Endgerät mit den Merkmalen nach Anspruch 13.

Demnach wird ein Sprachspeicher so verwaltet, daß jedem Benutzer ein eigener Speicherbereich mit veränderbarer Speichergröße zugeteilt wird und daß für jeden Benutzer durch Zugriff auf einen allgemeinen Speicherbereich die Speichergröße seines eigenen Speicherbereiches an seinen Speicherbedarf angepaßt werden kann. Dadurch wird fortlaufend jedem Benutzer nur soviel Speicherplatz zugeteilt, wie er benötigt, so daß dieser und weitere Benutzer bei Bedarf auf möglichst viel verbleibenden Speicherplatz zugreifen können.

Vorteilhafte Ausgestaltungen der Erfindung sind den Unteransprüchen zu entnehmen.

Im weiteren wird die Erfindung anhand mehrerer Ausführungsbeispiele und unter Zuhilfenahme folgender Zeichnungen beschrieben:

| Fig. 1 | zeigt schematisch verschiedene erfindungsgemäß ausgeführte Telekommunikations-Einrichtungen, die an ein öffentliches Telekommunikationsnetz angeschlossen sind; |
| Fig. 2a | zeigt das Blockschaltbild einer Vorrichtung mit einem Sprachspeicher; |
| Fig. 2b | zeigt schematisch die Aufteilung des Sprachspeichers gemäß der Erfindung; |
| Fig. 3a, b, c | zeigen Ablaufdiagramme zur Durchführung eines erfindungsgemäßen Verfahrens zur Ver- |

waltung des Sprachspeichers.

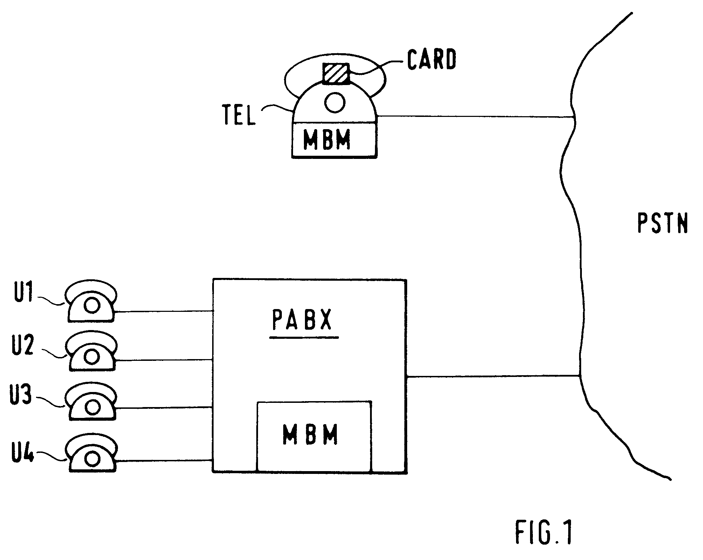

In Fig. 1 sind zwei Telekommunikations-Einrichtungen, wie eine Telekommunikations-Anlage PABX und ein Telekommunikations-Endgerät TEL, dargestellt, die an ein öffentliches Telekommunikationsnetz PSTN angeschlossen sind. Die Telekommunikations-Anlage PABX, auf die z.B. vier Benutzer U1 bis U4 zugreifen, enthält eine als elektronische Sprachbox (voice mailbox) ausgeführte Vorrichtung MBM mit einem Sprachspeicher. Das Telekommunikations-Enddgerät TEL, auf das mehrere Benutzer über ein Identifizierungsmittel, wie z.B. eine Chipkarte CARD, zugreifen, ist mit einer Vorrichtung MBM verbunden, die einen Sprachspeicher enthält und die als Anrufbeantworter eingesetzt wird.

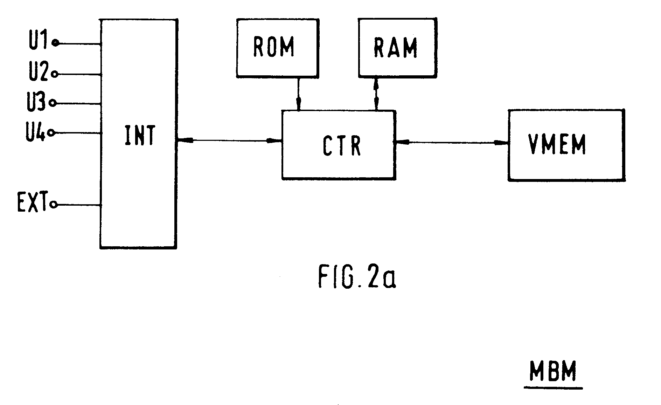

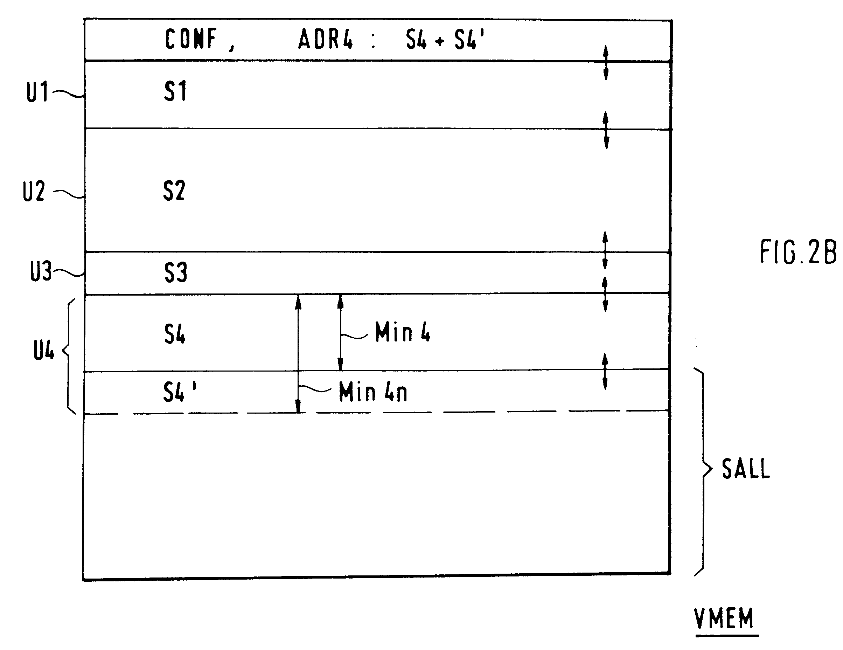

Fig. 1 zeigt schematisch die Ausführung von Telekommunikations-Einrichtungen mit der erfindungsgemäßen Vorrichtung MBM, die im weiteren anhand der Fig. 2a und b beschrieben wird.

Fig. 2a zeigt ein vereinfachtes Blockschaltbild einer Vorrichtung MBM, die als Sprachspeicher-Modul in verschiedenen Kommunikations-Einrichtungen, insbesondere in Telekommunikations-Einrichtungen, eingesetzt werden kann. Die Vorrichtung MBM nach Fig. 2a enthält Baugruppen, wie ein als Mikrokontroller CTR ausgeführtes Steuermittel, einen Sprachspeicher VMEM, eine Schnittstellenschaltung INT, einen Festwertspeicher ROM und einen Arbeitsspeicher RAM. Der Mikrokontroller CTR ist mit den anderen Baugruppen verbunden und steuert die Verwaltung des Sprachspeichers VMEM, der z.B. als Halbleiterspeicher mit einer Speicherkapazität von 2,4 MByte ausgeführt ist. Auf den Sprachspeicher VMEM haben beispielsweise vier Benutzer U1, U2, U3 und U4 Zugriff, welcher über die Schnittstellenschaltung INT erfolgt.

In diesem Beispiel dient die gezeigte Vorrichtung MBM als elektronische Sprachbox (voice mailbox) für die Benutzer U1 bis U4 einer Telekommunikations-Anlage.

Dritte EXT, die eine Nachricht für einen Benutzer hinterlegen wollen, können dies nur dann, wenn die Mailbox dieses Benutzers freien Speicherplatz hat. Die Vorrichtung verwaltet den Sprachspeicher VMEM derart, daß seine Speicherkapazität effektiv genutzt wird, um den Benutzern bei Bedarf möglichst viel freien Speicherplatz bereitstellen zu können. Dazu steuert der Mikrokontroller CTR eine dynamische Aufteilung des Sprachspeichers VMEM, wie sie beispielhaft in Fig. 2b dargestellt ist.

Der Sprachspeicher VMEM ist in verschiedene Speicherbereiche mit einer Speichergröße unterteilt, die innerhalb von Grenzen veränderbar ist, bei dem die Benutzer-Speicherbereiche S1, S2, S3 und S4 jeweils einem der Benutzer U1, U2, U3 oder U4 zugeordnet sind. Diese Zuordnung ist in einem Adressen-Speicherbereich CONF unter Zeigern ADR4 abgespeichert, die jeweils einem der Benutzer U4 zugewiesen sind. Der verbleibende Speicherbereich steht als Gemeinschafts-Speicherbereich SALL allen Benutzern zur Verfügung.

Die Benutzer-Speicherbereiche S1 bis S4 sind so zugeschnitten, daß ihre Speichergröße an den minimalen Speicherbedarf des jeweiligen Benutzers angepaßt ist. So hat z.B. der Benutzer-Speicherbereich S4 eine Speichergröße Min4 von 960 kByte. Bei einer Abtastrate von z.B. 8 kHz mit einer Auflösung von 8 bit = 1 Byte und einer Sprachdatenkodierung mit einem Datenreduktionsfaktor 4 können Nachrichten mit einer Gesamtdauer von 8 min = 480 sec = 960 kByte / (8 kByte $\cdot$ sec$^{-1}$/4) in diesem Benutzer-Speicherbereich S4 abgespeichert werden. Ist dieser Benutzer-Speicherbereich S4 bereits ausgeschöpft, so steuert der Mikrokontroller CTR eine Zuweisung eines Teils S4' des Gemeinschafts-Speicherbereichs SALL zu diesen Benutzer-Speicherbereich, falls weitere Nachrichten für den Benutzer U4 abgespeichert werden sollen.

Durch das Hinzufügen des Teils S4' von beispielsweise 40 kByte Speichergröße hat der Benutzer U4 zum Zugriff auf eine mailbox mit 1 Mbyte Speicherplatz. Der zusätzlich hinzugefügte Teil S4' wird im Adressen-Speicherbereich CONF unter dem Zeiger ADR4 (= S4 + S4') eingetragen. Falls dieser Teil S4' nach dem Auslesen der Nachricht wieder frei wird, wird er durch Löschen der Zeigeradresse S4'an den Gemeinschafts-Speicherbereich SALL rückübertragen. Die Rückübertragung dieses Teils S4' kann jedoch auch zumindest temporär unterbleiben, so daß der Benutzer-Speicherbereich des Benutzers U4 eine neu definierte minimale Speichergröße Min 4n hat. Weiterhin kann auch der Gemeinschafts-Speicherbereich SALL als Ganzes zu dem Benutzer-Speicherbereich S4 hinzugefügt werden.

Das Hinzufügen und die Rückübertragung eines Teils des Gemeinschafts-Speicherbereichs ist für alle Benutzer-Speicherbereiche anwendbar. Der Sprachspeicher VMEM wird demnach dynamisch so unterteilt, daß möglichst keiner der Benutzer U1 bis U4 freie Speicherbereiche belegt ohne sie zu nutzen.

Die Vorrichtung zum Verwalten des Sprachspeichers kann auch die Ansteuerung der Speichergrößen so steuern, daß für die Benutzer maximale Speichergrößen festgelegt sind. Dadurch kann innerhalb des Gemeinschafts-Speicherbereichs SALL ein Speicherplatz für einen zusätzlichen Benutzer (s. EXT in Fig. 2a) reserviert werden.

Für die Änderung der Speichergröße des Benutzer-Speicherbereichs S4 ist es vorteilhaft den Benutzer-Speicherbereich aus einer veränderbaren Anzahl von Speichersegmenten aufzubauen, die eine fest vorgegebene Segmentgröße haben. Diese Segmentgröße ist z.B. auf Betriebsanforderungen für den Mikrokontroller CTR oder auf die Datenstruktur der Sprachdaten abgestimmt. In diesem Beispiel beträgt die Segmentgröße 512 Byte.

Die Speichergröße des Benutzer-Speicherbereichs ergibt sich aus der Anzahl der ihm zugewiesenen Speichersegmente. Zur Verwaltung des Sprachspeichers VMEM und seiner Speicherbereiche S1 bis S4 und SALL werden im Adressen-Speicherbereich CONF Segmentlisten abgespeichert. Jede Segmentliste enthält Zeiger, die diejenigen Speichersegmente angeben, die zusammen einen Speicherbereich bilden. Für jedes Speichersegment ist ein Zeiger abgespeichert. Dadurch können Speichersegmente, die innerhalb des Sprachspeichers physikalisch beliebig verteilt sind, logisch zu einem Speicherbereich zusammengefaßt werden.

Alternativ zur Abspeicherung von Segmentlisten wird im Adressen-Speicherbereich CONF für jeden Speicherbereich nur ein erster Zeiger abgespeichert. Dieser gibt das erste Speichersegment einer Segment-Kette an, die den Speicherbereich bildet. Am Ende des ersten Speichersegmentes, d.h. unter der letzten Adresse im ersten Speichersegment, ist ein Zeiger abgelegt der auf das zweite Speichersegment zeigt. In gleicher Weise ist im zweiten Speichersegment ein Zeiger abgelegt der auf das dritte Speichersegment zeigt usw.. Durch die logische Verkettung von Speichersegmenten wird jeweils ein Speicherbereich mit veränderbarer Speichergroße gebildet. Zum Zugriff auf den Speicherbereich braucht nur ein erster Zeiger im Adressen-Speicherbereich CONF abgespeichert zu werden.

Im folgenden wird die Verwaltung des Sprachspeichers VMEM beschrieben, insbesondere das Hinzufügen und die Rückübertragung eines Teils des Gemeinschafts-Speicherbereichs. Dabei umfaßt der Teil einen oder mehrere der oben beschriebenen Speichersegmente.

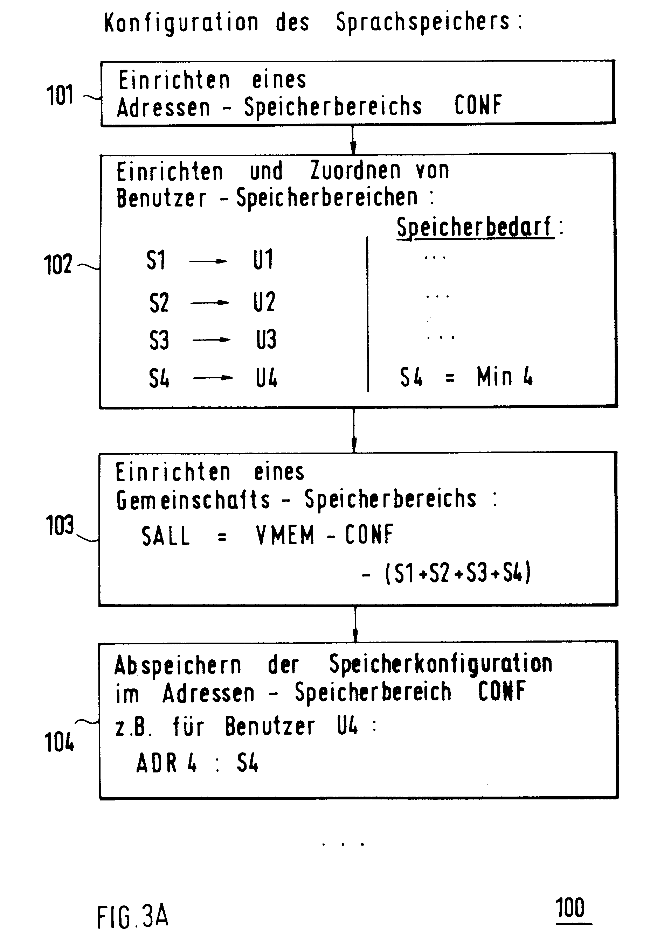

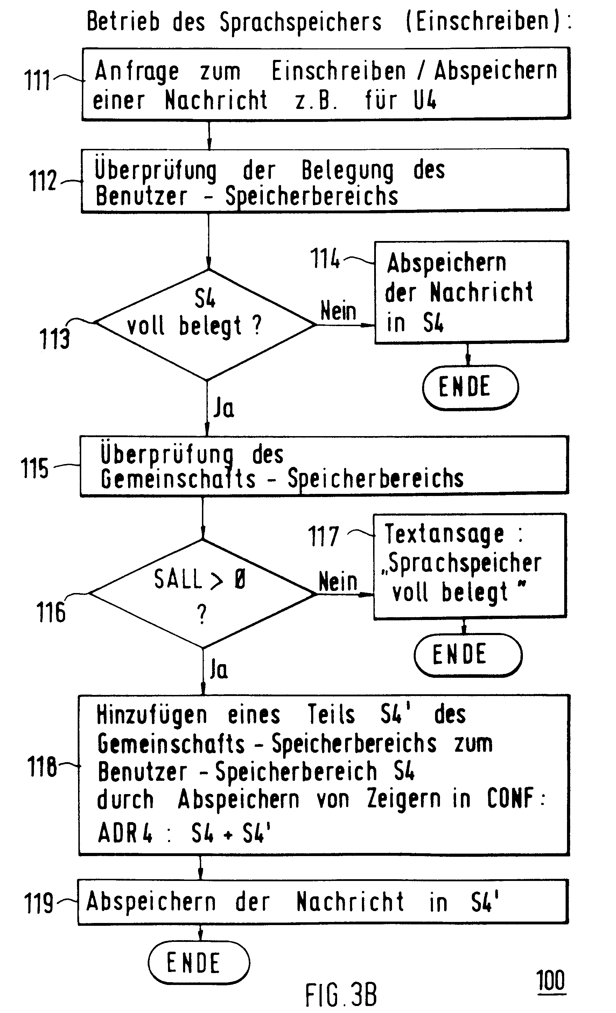

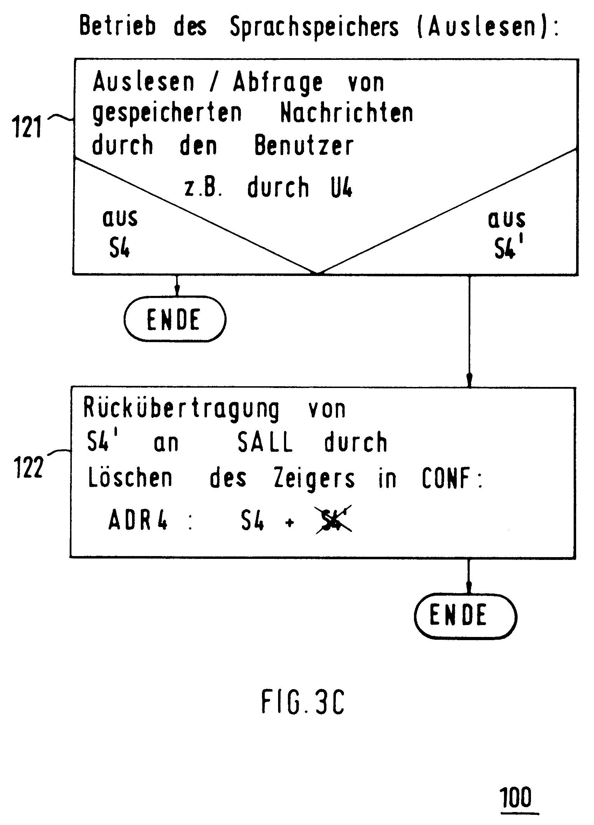

Die Verwaltung des Sprachspeichers ist in den Fig. 3a, b und c dargestellt, die Ablaufdiagramme für ein Verfahren 100 gemäß der Erfindung zeigen.

In Fig. 3a ist beispielhaft ein Ablauf zur Konfiguration des Sprachspeichers dargestellt:
In einem ersten Schritt 101 wird ein Adressen-Speicherbereich CONF innerhalb des Sprachspeichers eingerichtet, in dem Zeiger oder Adressen abgespeichert werden, die die Konfiguration des Sprachspeichers angeben. In einem zweiten Schritt 102 folgt das Einrichten von Benutzer-Speicherbereichen S1, S2, S3 und S4, von denen jeweils einer einem Benutzer U1, U2, U3 bzw. U4 zugeordnet wird. Weiterhin werden Randbedingungen wie z.B. minimale Speichergröße Min4 eines der Benutzer-Speicherbereichs S4 festgelegt. Es folgt in einem dritten Schritt 103 das Einrichten eines Gemeinschafts-Speicherbereichs SALL, dem der verbleibende Speicherplatz VMEM-CONF-(S1 + S2 + S3 + S4) zugeteilt wird. Anschließend wird in einem vierten Schritt 104 die oben beschriebene Konfiguration des Sprachspeichers im Adressen-Speicherbereich CONF abgelegt. Dort wird u.a. jedem der Benutzer ein Zeiger ADR4 zugeordnet, unter der Angaben über seinen Benutzer-Speicherbereich abgespeichert werden.

In Fig. 3b ist die Verwaltung des Sprachspeichers während des Abspeicherns einer Nachricht für einen der Benutzer U4 beispielhaft dargestellt:

In einem ersten Schritt 111 wird eine Anfrage zum Abspeichern der Nachricht erfaßt. Dieses löst einen weiteren Schritt 112 aus, in welchem die Belegung der Benutzer-Speicherbereiche S4 z.B. durch Auslesen der entsprechenden Daten im Adressen-Speicherbereich CONF überprüft wird. In einem Entscheidungsschritt 113 wird festgestellt, ob dieser Benutzer-Speicherbereich voll belegt ist. Falls "Nein", wird in einem Schritt 114 die Nachricht in S4 abgespeichert. Falls "Ja", wird in einem Schritt 115 die Überprüfung des Gemeinschafts-Speicherbereichs SALL eingeleitet. Dazu wird in einem Entscheidungsschritt 116 festgestellt, ob der Gemeinschafts-Speicherbereich noch freien Speicherplatz enthält (SALL > 0 ?). Falls "Nein" wird in einem Schritt 117 eine Textansage ausgelöst, die dem Benutzer U4 Einsprechenden mitteilt: "Sprachspeicher ist zur Zeit voll belegt". Falls "Ja", wird in einem Schritt 118 ein Teil S4' des Gemeinschafts-Speicherbereichs zum Benutzer-Speicherbereich S4 hinzugefügt. Dies geschieht durch Abspeichern einer Zeigeradresse S4' im Adressen-Speicherbereich CONF. Anschließend folgt in einem Schritt 119 das Abspeichern der Nachricht des Einsprechenden in dem hinzugefügten Teil S4'.

In Fig. 3c ist beispielhaft das Auslesen einer Nachricht aus einem der Benutzer-Speicherbereiche S4 oder dem hinzugefügten Teil S4' dargestellt:

Zunächst wird in einem Entscheidungsschritt 121 geprüft, wo die auszulesende Nachricht abgespeichert ist. Ist die Nachricht im hinzugefügten Teil S4' abgespeichert, so folgt nach dem Auslesen der Nachricht anschließend in einem Schritt 122 die Rückübertragung dieses Teils S4' an den Gemeinschafts-Speicherbereich SALL. Dies geschieht dadurch, daß die entsprechende Zeigeradresse für diesen Teil S4' im Adressen-Speicherbereich CONF gelöscht wird. Danach steht dieser Teil allen Benutzern wieder zur Verfügung.

Die Beschreibung der Erfindung stellt einige Ausführungsformen heraus. Es sind darüberhinaus zahlreiche weitere Ausgestaltungen der Erfindung denkbar wie z.B. im Bereich der Bürokommunikation, der Computervernetzung oder von öffentlichen Informationssystemen.

**Patentansprüche**

1. Verfahren (100) zur Verwaltung eines Sprachspeichers (VMEM), bei dem der Sprachspeicher, auf den eine Vielzahl von Benutzern (U1, U2, U3, U4) zugreift, in Benutzer-Speicherbereiche veränderbarer Speichergröße und einen Gemeinschafts-Speicherbereich unterteilt wird, indem
   - jedem der Benutzer (U4) einer der Benutzer-Speicherbereiche (S4) mit veränderbarer Speichergröße zugeordnet wird (102),
   - allen Benutzern der Gemeinschafts-Speicherbereich (SALL) zugeordnet wird (103), der den verbleibenden Speicherbereich des Sprachspeichers (VMEM) umfaßt,
   und bei dem die Speichergröße des jeweiligen Benutzer-Speicherbereichs (S4), die innerhalb vorgegebener Grenzen veränderbar ist, an den Speicherbedarf des Benutzers (U4) angepaßt wird (111 ... 122), und
   - zumindest ein Teil (S4') des Gemeinschafts-Speicherbereichs zu dem Benutzer-Speicherbereich (S4) zugeordnet wird (118) und, falls dieser Teil (S4') zur Deckung des Speicherbedarfs nicht mehr benötigt wird, an den Gemeinschafts-Speicherbereich (SALL) zurückübertragen wird (122).

2. Verfahren (100) nach Anspruch 1, bei dem innerhalb des Sprachspeichers (VMEM) ein Adressen-Speicherbereich (CONF) eingerichtet wird (101), in welchem die Unterteilung des Sprachspeichers, welche die Speicherkonfiguration angibt, abgespeichert wird (104), indem für jeden der Benutzer (U4) ein Zeiger (ADR4) abgespeichert wird, der den entsprechenden Benutzer-Speicherbereich (S4) angibt.

3. Verfahren (100) nach Anspruch 1, bei dem die veränderbare Speichergröße des jeweiligen Benutzer-Speicherbereichs (S4), die innerhalb vorgebbarer Grenzen veränderbar ist, so verändert wird, daß sie einen einem minimalen (Min4) oder maximalen Speicherbedarf entsprechenden Grenzwert überschreitet bzw. unterschreitet.

4. Verfahren (100) nach Anspruch 3, bei dem der minimale (Min4) oder der maximale Speicherbedarf fortlaufend neu (Min4n) aus einer Auswertung des Speicherbedarfs innerhalb einer vorgegebenen Zeitspanne ermittelt wird.

5.  Verfahren nach Anspruch 1,
    bei dem jedem der Benutzer-Speicherbereiche (S1, S2, S3, S4) eine veränderbare Anzahl von Speichersegmenten mit einer fest vorgegebenen Segmentgröße zugewiesen wird.

6.  Verfahren nach Anspruch 5,
    bei dem die Zuweisung der Speichersegmente erfolgt, indem für jeden der Benutzer-Speicherbereiche (S1, S2, S3, S4) eine Segmentliste mit Zeigern erstellt wird, die auf die zugewiesenen Speichersegmente zeigen.

7.  Verfahren nach Anspruch 6,
    bei dem die Zuweisung der Speichersegmente mittels einer logischen Verkettung der Speichersegmente erfolgt, indem jedem der Benutzer-Speicherbereiche (S1, S2, S3, S4) ein erster Zeiger zugeordnet wird, der auf das erste der verketteten Speichersegmente zeigt und indem in jedem der verketteten Speichersegmente ein weiterer Zeiger abgespeichert wird, der auf das nachfolgende Speichersegment zeigt.

8.  Verfahren nach Anspruch 1,
    bei dem in den Benutzer-Speicherbereichen (S1, S2, S3, S4) Nachrichten von den Benutzern (U1, U2, U3, U4) für Dritte (Ext) und/oder Nachrichten von Dritten für die Benutzer abgespeichert werden.

9.  Verfahren nach Anspruch 1,
    bei dem in den Benutzer-Speicherbereichen (S1, S2, S3, S4) Sprachmuster abgespeichert werden, die von dem Benutzer und/oder von Dritten stammen, um eine Spracherkennung auszuführen.

10. Vorrichtung (MBM) mit einem Sprachspeicher (VMEM), auf den eine Vielzahl von Benutzern (U1, U2, U3, U4) zugreifen und mit einem Steuermittel (CTR) zur Verwaltung des Sprachspeichers so, daß der Sprachspeicher (VMEM) mehrere Benutzer-Speicherbereiche veränderbarer Speichergröße (S1, S2, S3, S4) enthält, von denen jeweils einer (S4) einem der Benutzer (U4) zugeordnet ist, und so, daß der Sprachspeicher desweiteren einen Gemeinschafts-Speicherbereich (SALL) enthält, der den verbleibenden Speicherbereich des Sprachspeichers umfaßt und so, daß das Steuermittel (CTR) ein Hinzufügen von zumindest einem Teil (S4') des Gemeinschafts-Speicherbereichs (SALL) zu dem Benutzer-Speicherbereich (S4) und eine Rückübertragung des hinzugefügten Teils (S4') an den Gemeinschafts-Speicherbereich (SALL) so steuert, daß die Speichergröße des Benutzer-Speicherbereichs (S4) innerhalb vorgegebener Grenzen veränderbar ist, und an den Speicherbedarf des Benutzers (U4) angepaßt ist.

11. Vorrichtung (MBM) nach Anspruch 10,
    mit einer Schnittstellenschaltung (INT) zum Anschluß an oder zur Integration in eine Telekommunikations-Einrichtung (PABX, TEL), auf die die Benutzer (U1, U2, U3, U4) zugreifen.

12. Telekommunikations-Anlage (PABX), mit der Teilnehmergeräte mehrere Benutzer (U1, U2, U3, U4) verbindbar sind und die als elektronische Sprachbox (voicemailbox) eine Vorrichtung nach Anspruch 10 enthält.

13. Telekommunikations-Endgerät (TEL), auf das mittels Identifizierungsmitteln (CARD) mehrere Benutzer zugreifen können und das als elektronische Sprachbox (voicemailbox) eine Vorrichtung nach Anspruch 10 enthält.

FIG.1

FIG. 2a

MBM

FIG.2B

CONF , ADR4 : S4 + S4'

| U1 | S1 |
| U2 | S2 |
| U3 | S3 |
| U4 | S4 |
|    | S4' |

Min 4

Min 4n

SALL

VMEM

Konfiguration des Sprachspeichers:

101 — Einrichten eines
Adressen – Speicherbereichs CONF

102 — Einrichten und Zuordnen von
Benutzer – Speicherbereichen :

Speicherbedarf:

S1 ⟶ U1 ...

S2 ⟶ U2 ...

S3 ⟶ U3 ...

S4 ⟶ U4 S4 = Min 4

103 — Einrichten eines
Gemeinschafts – Speicherbereichs :

SALL = VMEM – CONF

– (S1+S2+S3+S4)

104 — Abspeichern der Speicherkonfiguration
im Adressen – Speicherbereich CONF
z.B. für Benutzer U4 :

ADR 4 : S4

. . .

FIG.3A 100

Betrieb des Sprachspeichers (Einschreiben):

111 — Anfrage zum Einschreiben / Abspeichern einer Nachricht z.B. für U4

112 — Überprüfung der Belegung des Benutzer - Speicherbereichs

113 — S4 voll belegt ?

114 — Abspeichern der Nachricht in S4 → **Nein**

ENDE

**Ja**

115 — Überprüfung des Gemeinschafts - Speicherbereichs

116 — SALL > 0 ?

117 — Textansage : „Sprachspeicher voll belegt " → **Nein**

ENDE

**Ja**

118 — Hinzufügen eines Teils S4' des Gemeinschafts - Speicherbereichs zum Benutzer - Speicherbereich S4 durch Abspeichern von Zeigern in CONF : ADR4 : S4 + S4'

119 — Abspeichern der Nachricht in S4'

ENDE

FIG. 3B

100

Betrieb des Sprachspeichers (Auslesen):

```
121 ─┐   Auslesen / Abfrage von
         gespeicherten  Nachrichten
         durch  den  Benutzer

              z.B.  durch U4

         aus                    aus
         S4                     S4'
```

( ENDE )

```
122 ─┐   Rückübertragung  von
         S4'    an     SALL  durch
         Löschen   des  Zeigers  in  CONF:

         ADR4 :    S4  +  S4
```

( ENDE )

FIG. 3C

<u>100</u>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | TENCON '89, FOURTH IEEE REGION 10 INTERNATIONAL CONFERENCE 22. November 1989 , BOMBAY, IND1A Seiten 503 - 506 PANDE ET AL. 'A PC based voice mailing system' * Seite 505, linke Spalte * --- | 1-3,5,6, 8,10-12 | G06F12/02 H04M3/50 |
| X | EP-A-0 282 787 (SIEMENS) * Spalte 2, Zeile 34 - Spalte 3, Zeile 38 * * Spalte 5, Zeile 52 - Spalte 6, Zeile 9; Abbildung 6 * --- | 1-3,6, 10-12 | |
| X | EP-A-0 446 940 (FUJITSU) * Zusammenfassung; Abbildungen 2,3,4,6 * --- | 1-3,5-7, 10 | |
| A | EP-A-0 557 813 (ALCATEL SEL) * Seite 2, Zeile 20 - Zeile 43 * ----- | 1,5-7, 10,13 | RECHERCHIERTE SACHGEBIETE (Int.Cl.6) G06F H04M |

Der vorliegende Recherchenbericht wurde für alle Patentansprüche erstellt

| Recherchenort | Abschlußdatum der Recherche | Prüfer |
|---|---|---|
| DEN HAAG | 19. Januar 1995 | Nielsen, O |

EPO FORM 1503 03.82 (P04C03)